(19) **Europäisches Patentamt**

**European Patent Office**

**Office européen des brevets**

(11) **EP 0 904 575 B1**

(12) **FASCICULE DE BREVET EUROPEEN**

(45) Date de publication et mention
de la délivrance du brevet:
**05.04.2000 Bulletin 2000/14**

(51) Int Cl.⁷: $G05D\ 1/06$, G01C 5/00,
G01C 23/00

(21) Numéro de dépôt: **97928322.3**

(22) Date de dépôt: **10.06.1997**

(86) Numéro de dépôt international:
**PCT/FR97/01028**

(87) Numéro de publication internationale:
**WO 97/48029 (18.12.1997 Gazette 1997/54)**

(54) **PROCEDE ET SYSTEME DE GESTION D'ALTITUDE POUR AERODYNE**

VERFAHREN UND VORRICHTUNG ZUR STEUERUNG DER FLUGHÖHE EINES FLUGZEUGS

METHOD AND SYSTEM FOR AERODYNE ALTITUDE MANAGEMENT

(84) Etats contractants désignés:
**DE FR GB**

(30) Priorité: **11.06.1996 FR 9607215**

(43) Date de publication de la demande:
**31.03.1999 Bulletin 1999/13**

(73) Titulaire: **THOMSON-CSF SEXTANT
78141 Vélizy Villacoublay (FR)**

(72) Inventeurs:
• **FAGARD, Pierre, Thomson-CSF S.C.P.I.
F-94117 Arcueil Cedex (FR)**
• **MAGGI, Michel, Thomson-CSF S.C.P.I.
F-94117 Arcueil Cedex (FR)**

(74) Mandataire: **Simonnet, Christine et al
Thomson-CSF Propriété Intellectuelle,
13, Avenue du Président Salvador Allende
94117 Arcueil Cédex (FR)**

(56) Documents cités:
WO-A-86/05021          GB-A- 2 139 588
US-A- 4 387 360         US-A- 5 136 301
US-A- 5 196 847         US-A- 5 250 947

## Description

La présente invention concerne un procédé et un système de gestion d'altitude pour aérodynes (avions, hélicoptères...) adapté à la navigation dans un espace à séparation verticale réduite. Dans la suite on parlera le plus souvent d'avion. La réglementation RVSM (sigle pour la dénomination anglaise "Reduced Vertical Separation Minimum") en matière de contrôle aérien commence à exiger une surveillance beaucoup plus précise de l'altitude des aérodynes dans les espaces à fort trafic et dans ces espaces la séparation verticale est réduite. La validation des informations recueillies doit être fiable et des sécurités sont nécessaires.

Les systèmes de gestion d'altitude actuels, embarqués sur les avions anciens, sont mal adaptés pour fonctionner dans ces espaces. Les systèmes produisent une alarme sonore et/ou visuelle lorsque l'altitude de l'avion diffère d'une altitude de consigne à un seuil prés. Ce seuil est généralement de l'ordre de $\pm$ 300 pieds. Le système ne fournit pas d'autre information plus précise sur la nature de l'évolution par rapport à l'altitude de consigne. Le pilote sait seulement qu'il navigue à l'altitude de consigne au seuil près tant que l'alarme n'a pas été activée, voir par exemple le brevet US-A-5 250 947.

De plus, lors des phases de capture automatique d'altitude, la trajectoire de l'avion fait un écart d'altitude (connue sous la dénomination anglaise d'"'overshoot") avant de converger vers l'altitude de consigne. Un déclenchement de l'alarme intempestif peut donc survenir dans ce cas si l'on se contente de réduire le seuil de surveillance pour veiller un niveau de consigne de manière plus précise.

La présente invention propose un procédé et un système de gestion d'altitude qui permettent une surveillance serrée de l'altitude d'évolution. Le système est utilisable en pilotage manuel ou en mode de tenue d'altitude automatique actuelle ou affichée.

Le système de gestion d'altitude selon l'invention est adapté aussi bien aux avions de conception ancienne qu'aux avions actuels équipés d'un système de gestion de vol FMS (sigle pour la dénomination anglaise "Flight Management System") qui est un calculateur embarqué assistant le pilote dans un certain nombre d'opérations. Ces opérations sont notamment des opérations de définition de plan de vol.

Le système de gestion du vol fonctionne à partir des données introduites par le pilote, de données fournies par des capteurs répartis dans l'avion (notamment des capteurs d'altitude) et éventuellement de données transmises depuis le sol ou depuis des satellites.

En ce qui concerne les avions de conception ancienne que l'on veut mettre en conformité avec la nouvelle réglementation, le système de gestion d'altitude s'intègre facilement sans nécessiter de modification importante des équipements installés. Il peut être connecté à un pilote automatique ayant des performances suffisantes et à un système d'anémométrie existant. Les coûts de mise en conformité de tels avions sont réduits et les interventions sur le câblage des équipements existants également.

On propose donc ici un procédé de gestion d'altitude d'un aérodyne consistant:

- à sélectionner et à afficher une altitude de consigne,
- à acquérir l'altitude d'évolution de l'aérodyne à partir d'au moins un capteur d'altitude,
- à comparer l'altitude d'évolution et l'altitude de consigne, caractérisé en ce qu'il consiste:
- à armer un détecteur d'alerte altitude pourvu de moyens pour afficher son état, lorsque la différence entre l'altitude d'évolution et l'altitude de consigne est inférieure ou égale, en valeur absolue, à un premier seuil,
- à indiquer que l'altitude d'évolution est correcte lorsque la différence entre l'altitude d'évolution et l'altitude de consigne est inférieure ou égale, en valeur absolue, au premier seuil,
- et pendant que le détecteur d'alerte est armé, à produire une alarme si la différence entre l'altitude d'évolution et l'altitude de consigne est supérieure ou égale, en valeur absolue, à un second seuil, le second seuil étant plus grand que le premier.

Dans une variante qui permet de positionner l'avion par rapport à l'altitude de consigne, lorsque son altitude n'est pas correcte, le procédé consiste à indiquer si l'altitude d'évolution est plus haute ou plus basse que l'altitude de consigne.

Dans une variante avantageuse qui permet de ne pas attirer l'attention de l'équipage de manière inutile et de garantir une capture au plus près de l'altitude de consigne, le procédé consiste à inhiber le premier seuil pendant certaines périodes après l'armement du détecteur d'alerte altitude, et à le remplacer par un seuil intermédiaire calculé, plus grand que le premier seuil, fonction de la vitesse verticale de l'aérodyne et d'un coefficient propre à l'aérodyne et à sa configuration.

De manière à ne générer que les alarmes utiles au vol, lorsque l'altitude de consigne est modifiée pendant que le détecteur d'alerte altitude est armé, le procédé consiste à produire une alarme brève, si la différence entre la nouvelle altitude de consigne et l'ancienne est, en valeur absolue, supérieure ou égale au second seuil, puis à désarmer le détecteur d'alerte altitude ou si la différence entre la nouvelle altitude de consigne et l'ancienne est, en valeur absolue, inférieure au second seuil, à conserver l'ancienne valeur de l'altitude de consigne pour le déclenchement de l'alarme tant que la différence entre l'altitude d'évolution et la nouvelle altitude de consigne n'est pas, en valeur absolue, inférieure ou égale au premier seuil.

La présente invention concerne aussi un système de gestion d'altitude d'un aérodyne recevant une altitude d'évolution à partir d'un ou plusieurs capteurs d'altitude, comportant des moyens pour sélectionner une altitude de consigne, des moyens pour l'afficher, des moyens pour comparer les deux altitudes, caractérisé en ce qu'il comporte :

- un détecteur d'alerte altitude qui s'arme lorsque la différence entre l'altitude d'évolution et l'altitude de consigne est inférieure ou égale, en valeur absolue, à un premier seuil,
- des moyens pour indiquer l'état du détecteur d'alerte altitude,
- des moyens pour indiquer que l'altitude d'évolution est correcte, lorsque la différence entre l'altitude d'évolution et l'altitude de consigne est, en valeur absolue, inférieure ou égale au premier seuil,
- une alarme sonore et/ou visuelle qui est produite lorsque le détecteur d'alerte est armé, si la différence entre l'altitude d'évolution et l'altitude de consigne est supérieure ou égale, en valeur absolue, à un second seuil, le second seuil étant plus grand que le premier seuil.

D'autres caractéristiques et avantages de l'invention apparaîtront à la lecture de la description détaillée qui suit et qui est faite en référence aux dessins annexés dans lesquels:

- la figure 1a représente schématiquement les entrées/sorties et l'interface avec l'équipage d'un système de gestion d'altitude selon l'invention;
- les figures 1b, 1c représentent les informations données par l'afficheur de tendance lorsque la position de l'avion n'est pas correcte;
- la figure 2 représente un autre schéma du système de gestion selon l'invention;
- la figure 3 représente la trajectoire de l'avion lors d'une phase de capture automatique d'altitude;
- la figure 4 représente l'afficheur d'altitude de consigne lorsque l'un des capteurs d'altitude est en panne ainsi que l'afficheur d'altitude correcte et celui de tendance;
- les figures 5a, 5b représentent les informations données par l'afficheur d'altitude correcte et par l'afficheur de tendance lorsque les altitudes fournies par les capteurs d'altitude sont très différentes.

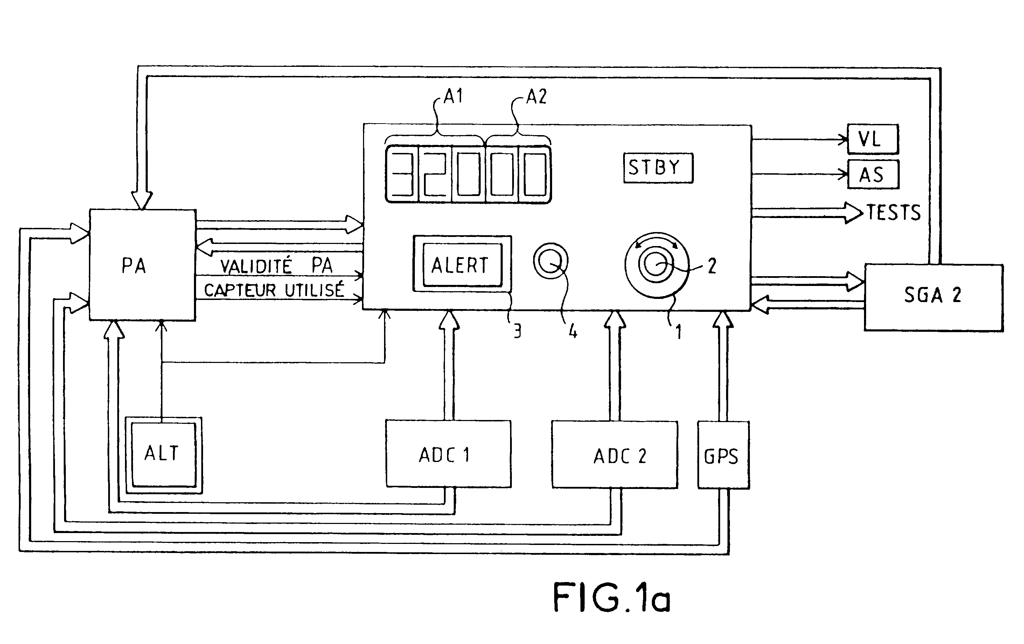

La figure 1a représente schématiquement un exemple de poste de commande et d'affichage pour la planche de bord d'un avion équipé d'un système de gestion d'altitude selon l'invention. Les entrées/sorties du système de gestion d'altitude sont matérialisées.

La face avant du poste de commande et d'affichage comporte des moyens pour sélectionner une altitude de consigne 1. Il s'agit ici d'un organe rotatif ou molette que le pilote peut tourner. Ces moyens de sélection de l'altitude de consigne sont couplés avec des moyens d'affichage A1 qui affichent cette altitude de consigne. Il s'agit ici d'un afficheur à trois digits qui ne donne en fait que le niveau de vol de consigne. Sur l'exemple, il s'agit du niveau 320 ce qui correspond à une altitude de 32 000 pieds. Cet afficheur A1, de préférence à consommation de courant, peut être, par exemple, à filament ou à diodes électroluminescentes. On pourrait envisager que cet afficheur ait plus de trois digits.

Le système de gestion d'altitude peut aussi comporter sur la planche de bord un bouton poussoir de marche/arrêt 4.

Le système de gestion d'altitude comporte une alarme matérialisée, dans cet exemple, par un voyant lumineux ALERT. Elle pourrait être matérialisée par un avertisseur sonore (non représenté). Le voyant lumineux et l'avertisseur sonore peuvent cohabiter. Le voyant lumineux ALERT est placé, sur la figure 1a, au dessous de l'afficheur A1. Le voyant lumineux d'alarme ALERT peut se trouver sur un bouton poussoir 3 destiné à annuler manuellement l'alarme, c'est-à-dire à éteindre le voyant lumineux ALERT, arrêter l'avertisseur sonore. Il est envisageable que le bouton poussoir 3 soit distinct du voyant lumineux ALERT. On verra par la suite quand l'alarme est activée.

Selon l'invention, le système de gestion d'altitude comporte un détecteur d'alerte altitude dont l'état est matérialisé ici par un voyant lumineux STBY situé à proximité de l'afficheur A1 de l'altitude de consigne.

Lorsque le voyant lumineux STBY est éteint cela signifie que le détecteur d'alerte altitude est armé et que le système de gestion d'altitude surveille l'altitude d'évolution.

Lorsque le voyant lumineux STBY est allumé cela signifie que le détecteur d'alerte altitude est désarmé et que le système de gestion d'altitude ne surveille pas l'altitude d'évolution. Le fonctionnement en détail du détecteur d'alarme altitude sera étudié ultérieurement.

De manière générale, le détecteur d'alerte altitude s'arme lorsque la différence entre l'altitude d'évolution et l'altitude de consigne est inférieure ou égale, en valeur absolue, à un premier seuil Si. Lorsque l'altitude d'évolution s'éloigne de l'altitude de consigne, le détecteur d'alerte altitude reste armé. Lorsque la différence entre l'altitude d'évolution et l'altitude de consigne est supérieure ou égale, en valeur absolue, à un second seuil S2, l'alarme est produite, le voyant ALERT s'allume et/ou l'avertisseur sonore retentit. Le second seuil S2 est supérieur au premier seuil S1. Le désarmement du détecteur d'alerte altitude est obtenu après annulation de l'alarme par actionnement du bouton poussoir 3. Le voyant STBY s'allume lorsque le détecteur d'alerte altitude se désarme.

Sur la planche de bord se trouve aussi des moyens pour indiquer lorsque l'altitude d'évolution de l'avion est correcte, c'est-à-dire lorsque la différence entre l'altitude d'évolution et l'altitude de consigne est inférieure ou égale, en valeur absolue, au premier seuil S1. Dans cet exemple, il s'agit d'un afficheur A2 à deux digits qui suit l'afficheur A1 de niveau de vol de consigne. L'ensemble des deux afficheurs symbolise l'altitude de consigne. Tout comme l'afficheur A1 il peut être à filament, à diodes électroluminescentes ou autres.

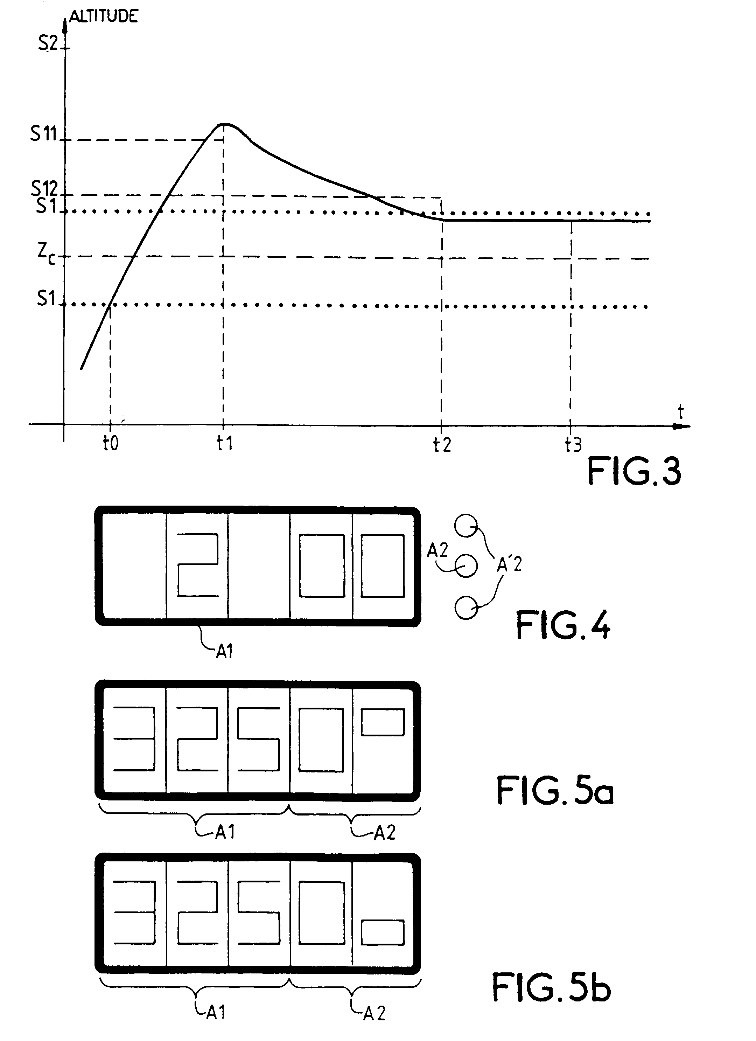

Sur la figure 1a, l'afficheur A2 d'altitude correcte montre deux "00" de même taille que les caractères de l'afficheur A1, ces deux "00" signifient que l'altitude d'évolution est correcte. On peut envisager que les moyens pour indiquer que l'altitude d'évolution est correcte soient réalisés par un voyant lumineux qui est allumé lorsque l'altitude est correcte, par exemple. Cette variante est illustrée sur la figure 4.

Le premier seuil Si est proche de l'altitude de consigne, c'est lui qui va permettre la surveillance précise de l'altitude. La valeur de ce premier seuil S1 peut être par exemple de 50 pieds, mais elle est modifiable selon les performances de l'avion et de son pilote automatique. Le second seuil S2, est variable mais imposé par la réglementation. Sa valeur est par exemple de 200 pieds.

Dans la configuration de la figure 1a, on suppose que le voyant lumineux STBY est éteint, le voyant lumineux ALERT aussi et que le système de gestion d'altitude effectue une surveillance de l'altitude d'évolution.

Le système de gestion d'altitude peut également prévoir d'informer l'équipage lorsque l'altitude d'évolution n'est pas correcte, c'est le cas lorsque la différence entre l'altitude d'évolution et l'altitude de consigne est supérieure, en valeur absolue, au premier seuil S1. Le système de gestion d'altitude comporte des moyens pour indiquer la tendance de l'altitude d'évolution par rapport à l'altitude de consigne.

L'indication de la tendance apparaît sur un afficheur de tendance A'2 qui dans cet exemple est confondu avec l'afficheur A2 d'altitude correcte.

Sur l'exemple représenté à la figure 1b, l'afficheur de tendance A'2 montre deux caractères de taille réduite de moitié, situés dans la partie haute. Cela signifie que l'altitude d'évolution est inférieure à l'altitude de consigne à laquelle on a retranché le premier seuil S1. L'avion est trop bas, il devra monter pour rejoindre l'altitude de consigne, ce qui permettra l'armement du détecteur d'alerte altitude.

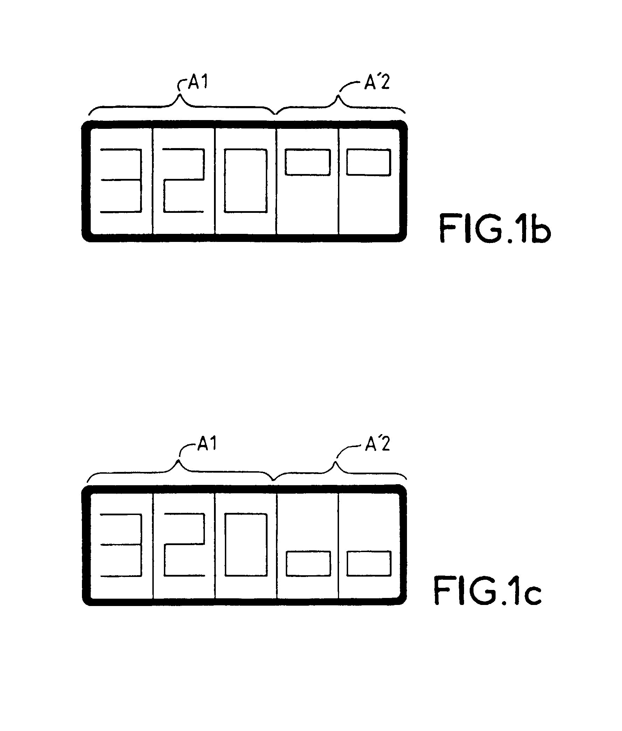

Sur l'exemple de la figure 1c, l'afficheur de tendance A'2 comporte deux caractères de taille réduite de moitié, situés dans sa partie basse. Cela signifie que l'altitude d'évolution est supérieure à l'altitude de consigne à laquelle on a ajouté le premier seuil S1. L'avion est trop haut, il devra descendre pour rejoindre l'altitude de consigne, ce qui permettra l'armement du détecteur d'alerte altitude.

Sur les figures 1b, 1c les caractères affichés sont des petits "oo". D'autres caractères sont envisageables des tirets "-" par exemple. L'indication de la tendance pourrait aussi apparaître sur un afficheur distinct de l'afficheur A2 d'altitude correcte. On pourrait avoir, par exemple, deux voyants placés l'un au dessous de l'autre qui s'allument séparément selon la tendance.

Le système de gestion d'altitude selon l'invention fonctionne aussi bien lorsque l'avion est en pilotage manuel ou en pilotage automatique. Dans ce dernier mode l'avion comporte, de manière connue, un pilote automatique PA et une fonction de tenue d'altitude qui coopère avec le pilote automatique et qui est matérialisée par un bouton poussoir ALT porté par la planche de bord. Ce bouton poussoir peut être enclenché lorsque l'altitude d'évolution est éloignée de l'altitude de consigne et dans ce cas l'avion effectue une capture d'altitude pour rejoindre l'altitude de consigne. Si le bouton poussoir est enclenché lorsque l'altitude d'évolution est proche de l'altitude de consigne, l'avion continue à évoluer au plus près de l'altitude de consigne et l'actionnement de la molette de variation de l'altitude de consigne a pour effet la mise en montée ou en descente de l'avion pour rejoindre l'altitude de consigne.

Le système de gestion selon l'invention reçoit des informations sur l'altitude d'évolution de l'avion en provenance d'au moins un capteur d'altitude ADC1, ADC2. Ce capteur d'altitude peut être une centrale anémobarométrique qui fournit une altitude en fonction de la pression et une vitesse verticale. Il y a généralement deux centrales anémobarométriques dont l'une est redondante pour des raisons de sécurité. Le pilote automatique PA sélectionne l'une des deux centrales ADC1, ADC2 qui lui envoie des informations.

On peut envisager que le système de gestion d'altitude reçoive des informations sur l'altitude d'évolution de l'avion d'au moins un système de positionnement par satellite GPS.

Pour que le système de gestion d'altitude bénéficie d'un niveau de sécurité élevé, il est préférable qu'il reçoive également des informations sur la validité des capteurs d'altitude. Ces informations en provenance des capteurs d'altitude circulent, de préférence, sur des lignes numériques série.

Le système de gestion d'altitude étant prévu pour fonctionner en mode de pilotage automatique, on prévoit qu'il reçoive alors des informations sur le capteur d'altitude utilisé par le pilote automatique PA, sur le mode de tenue automatique de l'altitude actuelle ou affichée en provenance du bouton poussoir ALT, sur la validité du pilote automatique PA. Ces informations sont des informations binaires, par exemple.

L'avion peut comporter pour des raisons de sécurité un deuxième système de gestion d'altitude SGA2 redondant qui envoie par exemple, par une ligne numérique série des informations au premier. On peut aussi prévoir une provision pour une entrée numérique série qui collecte des informations en provenance du pilote automatique pour la collecte d'informations optionnelles telles que la validité du pilote automatique PA, des modes engagés, du capteur d'altitude utilisé par le pilote automatique PA.....

L'interface de commande entre l'équipage et le système de gestion d'altitude est réalisé par la molette 1 de sélection de l'altitude de consigne, par le bouton poussoir 3 d'annulation de l'alarme, et éventuellement par un dispositif de déclenchement de test du système de gestion d'altitude matérialisé, dans l'exemple de la figure 1a, par un bouton poussoir 2 qui peut être localisé sur la molette 1 de sélection de l'altitude de consigne.

L'interface de signalisation entre le système de gestion d'altitude et l'équipage est réalisé par l'afficheur A1 à trois digits pour l'altitude de consigne, par l'afficheur A2 qui indique si l'altitude d'évolution est correcte, par l'afficheur A'2 qui indique la tendance lorsque l'altitude d'évolution n'est pas correcte (sur les figures 1 cet afficheur A'2 est confondu avec l'afficheur A2), par le voyant STBY qui indique si la surveillance d'altitude est en cours et dont l'état permet de visualiser l'armement ou non du détecteur d'alerte altitude ainsi que par le voyant ALERT d'alarme et/ou l'avertisseur sonore (non représenté).

Le système de gestion d'altitude envoie des informations, par exemple sur une ligne numérique série, vers le pilote automatique PA, pour lui fournir l'altitude de consigne dans le cas d'une utilisation optionnelle de tenue d'altitude affichée. Il peut éventuellement fournir des informations au second système de gestion d'altitude et vers un dispositif de tests.

On peut également prévoir un envoi d'informations binaires vers un voyant lumineux VL et un avertisseur sonore AS d'alarme redondants.

Pour des raisons de sécurité, il est préférable d'équiper les voyants et afficheurs de moyens de mesure du courant consommé de manière à tester leur validité en permanence.

La figure 1a montre de manière schématique les différentes entrées/sorties qui viennent d'être énumérées. Les informations sous forme de booléens sont représentées avec une flèche simple et les lignes numériques par une double flèche.

Le procédé de gestion de l'altitude de l'avion consiste à:

- sélectionner et à afficher l'altitude de consigne,
- à acquérir l'altitude d'évolution de l'avion à partir d'un ou plusieurs capteurs d'altitude,
- à comparer l'altitude de consigne et l'altitude d'évolution,
- à armer un détecteur d'alerte altitude lorsque la différence entre l'altitude d'évolution et l'altitude de consigne est inférieure ou égale en valeur absolue à un premier seuil,
- à indiquer que l'altitude d'évolution est correcte lorsque la différence entre l'altitude d'évolution et l'altitude de consigne est inférieure ou égale, en valeur absolue, au premier seuil,
- et pendant que le détecteur d'alerte est armé à générer une alarme si la différence entre l'altitude d'évolution et l'altitude de consigne est supérieure ou égale en valeur absolue à un second seuil, le second seuil étant plus grand que le premier.

Le procédé de gestion d'altitude prévoit, de plus, d'effectuer des tests de validité afin de bénéficier d'un niveau de sécurité élevé.

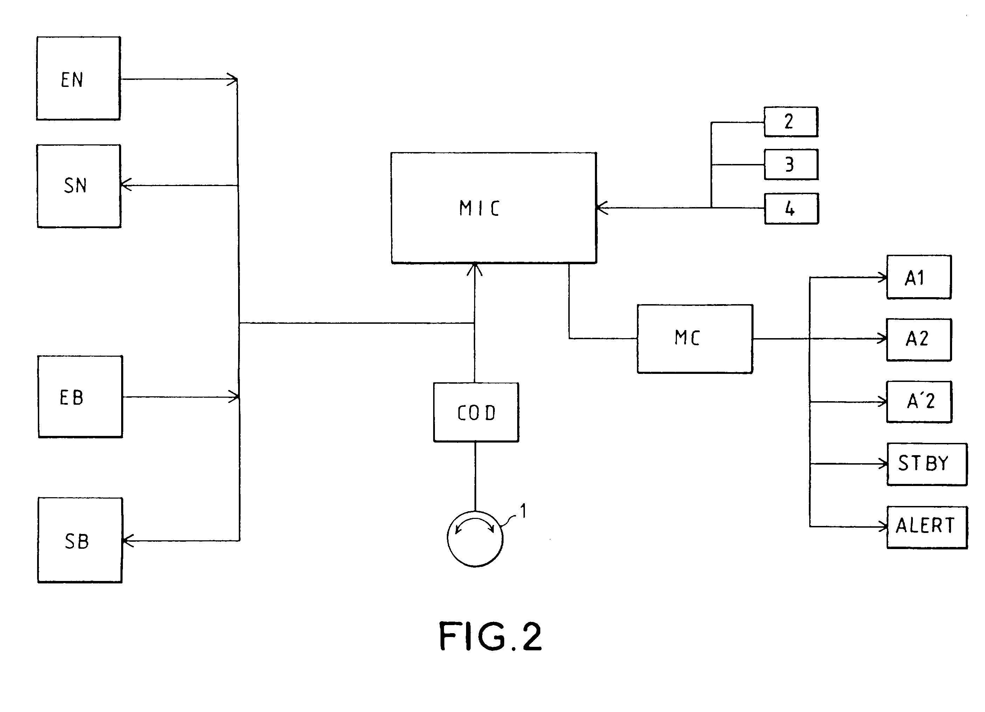

La figure 2 représente sous une autre forme le système de gestion d'altitude selon l'invention. Un micro contrôleur MIC effectue toutes les taches énumérées précédemment. Les différentes entrées/sorties sont représentées par des blocs: entrées par lignes numériques EN, sorties par lignes numériques SN, entrées par booléens EB, sorties par booléens SB. La molette 1 de sélection de l'altitude de consigne est associée à un codeur incrémenteur-décrémenteur COD. Le dispositif de contrôle du courant qui alimente les voyants et afficheurs est référencé MC sur la figure 2.

Le système de gestion d'altitude selon l'invention peut être prévu pour éviter de produire des alarmes inutiles ou pour éviter d'attirer l'attention du pilote inutilement, lors notamment des phases de capture automatique d'altitude, pendant les phases de modification de l'altitude de consigne en cours de surveillance d'altitude, c'est-à-dire lorsque le détecteur d'alerte altitude est armé et même en cas d'évolution à une altitude éloignée de l'altitude de consigne en pilotage manuel.

On va maintenant décrire plusieurs modes de fonctionnement du système de gestion d'altitude qui illustrent ce qui vient d'être dit.

En mode de pilotage manuel, le pilote automatique PA ne fonctionne pas et/ou le mode de tenue d'altitude automatique n'est pas engagé (bouton poussoir ALT non enclenché ).

Lorsque la différence entre l'altitude d'évolution de l'avion et l'altitude de consigne est inférieure ou égale, en valeur absolue, au premier seuil S1, l'afficheur A2 montre deux "00", ce qui indique que l'altitude est correcte. Les voyants ALERT et STBY sont éteints. Le voyant STBY éteint indique que le détecteur d'alerte altitude est armé et que la surveillance d'altitude est en cours.

Lorsque l'altitude d'évolution s'éloigne de la position correcte, sans passer au-delà du second seuil S2, les voyants ALERT et STBY restent éteints, mais l'afficheur de tendance A'2 indique si l'avion est trop haut ou trop bas.

Lorsque l'avion s'éloigne encore plus de la position correcte et passe le second seuil S2, l'alarme est produite : le voyant ALERT s'allume et/ou l'avertisseur sonore retentit. Le voyant STBY reste éteint jusqu'à ce que l'équipage neutralise l'alarme en appuyant sur le bouton poussoir 3. Tant que le voyant STBY reste éteint cela signifie que la surveillance de l'altitude est en cours. Lorsque le voyant STBY est allumé cela signifie qu'il n'y a plus de surveillance d'altitude

Pendant cette phase, que le détecteur d'alerte altitude soit armé ou non, l'afficheur de tendance A'2 continue à indiquer si l'avion est trop haut ou trop bas.

Sous pilote automatique, si le mode tenue de l'altitude est engagé, lorsque la différence entre l'altitude d'évolution de l'avion et l'altitude de consigne est en valeur absolue supérieure ou égale au second seuil S2 le détecteur d'alerte altitude n'est pas armé, le voyant STBY est allumé. L'afficheur de tendance A'2 indique si l'avion est trop haut ou trop bas.

Si le mode tenue de l'altitude est engagé lorsque l'avion est plus près de l'altitude de consigne et qu'il a passé le second seuil S2, l'avion va rejoindre au plus près cette altitude de consigne et effectuer une capture automatique d'altitude.

Dès que l'avion passe le premier seuil S1 pour la première fois, le détecteur d'alerte altitude s'arme et le voyant STBY s'éteint. L'afficheur A2 indique alors que la position est correcte. En phase de capture d'altitude automatique, il arrive fréquemment que l'avion effectue, ce que l'on nomme par le terme d'overshoot, un dépassement de l'altitude de consigne dû à l'inertie de l'avion et aux limitations imposées par les caractéristiques de l'avion.

Pour éviter des clignotements inutiles qui attirent inutilement l'attention du pilote alors que le vol se déroule normalement, ces clignotements se traduisant par des changements au niveau de l'afficheur A2 d'altitude correcte et de l'afficheur de tendance A'2 et pour garantir une capture d'altitude au plus près de la valeur de consigne, le système de gestion d'altitude peut effectuer une surveillance complémentaire de l'asservissement réalisé par le pilote automatique PA en inhibant le premier seuil S1 à certains moments de la capture.

Sur la figure 3, on a représenté les variations de l'altitude d'évolution de l'avion en fonction du temps pendant cette phase de capture automatique. On suppose que l'avion passe pour la première fois le seuil S1 au temps to.

L'avion a une altitude extrême au temps t1, son altitude est maximum dans l'exemple, elle pourrait être minimum. La différence t1-to est par exemple de 45 secondes. Elle est variable en fonction des performances de l'avion et du pilote automatique.

Au temps t2, l'avion est en fin d'overshoot et sa trajectoire converge vers l'altitude de consigne Zc. La différence t2-to est par exemple de 90 secondes. Elle varie aussi en fonction des performances de l'avion et du pilote automatique.

Au temps t3, sa trajectoire est stabilisée. La différence t3-t2 est d'environ 30 secondes.

Le système de gestion d'altitude inhibe le premier seuil S1 juste après to et jusqu'à t1. A l'instant to, le détecteur d'alerte altitude s'arme. Le premier seuil S1 est remplacé pendant cet intervalle de temps par un premier seuil intermédiaire calculé S11 égal à :

$$S11 = S1 + n1.\ Vz$$

avec : -Vz vitesse verticale instantanée issue de la centrale anémobarométrique utilisée par le pilote automatique PA,

- n1 coefficient de performance propre à l'avion et fonction notamment de son type, de sa configuration (masse, centrage), de son équipement (pilote automatique) en début de capture d'altitude : n1 vaut 1,10 par exemple.

De to à t1, si le premier seuil intermédiaire S11 n'est pas dépassé (alors que le premier seuil S1 l'est), le voyant STBY reste éteint (ce qui signifie que la surveillance de l'altitude est en cours) et l'afficheur A2 montre que l'altitude d'évolution est correcte. En revanche, si le premier seuil intermédiaire S11 est dépassé comme l'illustre la figure 3, l'afficheur de tendance A'2 indique si l'avion est pas trop haut ou trop bas ce qui traduit un overshoot supérieur à la normale.

Après t1 jusqu'à t2, le système de gestion d'altitude inhibe toujours le premier seuil S1 et le remplace par un second seuil intermédiaire calculé S12 égal à :

$$S12 = S1 + n2.Vz$$

avec : -n2 coefficient de performance propre à l'avion et fonction notamment de son type, de sa configuration, de son équipement en fin de capture automatique d'altitude : n2 vaut par exemple 1,05.

De t1 à t2, si le second seuil intermédiaire S12 n'est pas dépassé (alors que le premier seuil S1 l'est) le voyant STBY reste éteint et l'afficheur A2 signale que l'altitude est correcte. Si le second seuil intermédiaire S12 est dépassé lorsqu'on arrive au temps t2, l'afficheur de tendance A'2 indique la position de l'avion par rapport à l'altitude de consigne. Cet état signifie un écart de convergence de la capture d'altitude.

Dans la dernière phase de la capture entre l'instant t2 et l'instant t3, c'est le premier seuil Si qui est utilisé par le détecteur d'alerte altitude.

Si à l'instant t3, ce premier seuil S1 est dépassé le voyant STBY reste éteint mais l'afficheur de tendance A'2 signale si l'avion est trop haut ou trop bas. Cela signifie que la capture d'altitude s'est terminée avec une erreur supérieure à la normale. Une correction manuelle du pilote est éventuellement requise.

Au delà du temps t3, la différence entre l'altitude d'évolution et l'altitude de consigne est inférieure ou égale en valeur absolue au premier seuil S1, l'afficheur A2 indique que l'altitude est correcte.

Pendant toute cette phase de capture d'altitude, si la trajectoire de l'avion diverge et si le second seuil S2 est dépassé, l'alarme se déclenche, le voyant ALERT s'allume, l'avertisseur sonore retentit.

Le pilote peut neutraliser l'alarme en appuyant sur le bouton poussoir 3. Le détecteur d'alerte altitude se désarme, le voyant STBY s'allume tant que la différence entre l'altitude d'évolution et l'altitude de consigne n'est pas inférieure ou égale en valeur absolue au premier seuil. Il n'y a plus de surveillance de l'altitude.

Le système de gestion d'altitude selon l'invention peut être également capable d'éviter des alarmes inutiles lorsqu'en cours de surveillance d'altitude on change l'altitude de consigne. Ce changement est provoqué par une manipulation de la molette 1 de sélection de l'altitude de consigne.

Si différence entre la nouvelle altitude de consigne et l'ancienne est inférieure ou égale en valeur absolue au second seuil S2, il se peut que cette modification de l'altitude de consigne soit une erreur et que le pilote ait manipulé la molette 1 sans y prendre garde. Dans cette situation, le système de gestion d'altitude conserve l'ancienne altitude de consigne pour la production de l'alarme et le détecteur d'alerte reste armé sur l'ancien second seuil S2. Le voyant STBY reste éteint, ce qui signifie que la surveillance d'altitude est en cours. L'afficheur de tendance A'2 indique seulement la position de l'avion par rapport à la nouvelle altitude de consigne.

Si le pilote automatique ou le pilote fait manoeuvrer l'avion pour rejoindre au plus près la nouvelle altitude de consigne, le détecteur d'alerte altitude s'arme sur le nouveau second seuil lorsque la différence entre l'altitude d'évolution et la nouvelle altitude de consigne est inférieure ou égale en valeur absolue au premier seuil. L'afficheur A2 montre que la position est correcte.

Si le pilote a modifié son altitude de consigne par inadvertance et qu'il corrige sa maladresse, l'afficheur A'2 de tendance reprend la valeur qu'il avait avant la première modification.

Si la différence entre la nouvelle altitude de consigne et l'ancienne est supérieure, en valeur absolue, au second seuil S2, le détecteur d'alerte altitude se désarme en produisant une alarme visuelle et/ou sonore qui peut être brève, par exemple de l'ordre d'une demi seconde. Cette alarme est destinée à prévenir le pilote qu'il quitte un niveau surveillé.

L'afficheur de tendance A'2 montre la position de l'avion par rapport à la nouvelle altitude de consigne.

On peut également envisager que le système de gestion d'altitude conserve l'ancienne altitude de consigne pour la production de l'alarme si la différence entre la nouvelle altitude de consigne et l'ancienne est inférieure en valeur absolue au second seuil S2 et que le détecteur d'alerte altitude se désarme lorsque cette différence est supérieure ou égale, en valeur absolue, au second seuil S2.

Le système de gestion d'altitude selon l'invention peut aussi être utilisé comme poste de commande et d'affichage de l'altitude de consigne pour le pilote automatique si celui-ci est adapté.

Cette fonction est réalisée à l'aide de la liaison numérique vers le pilote automatique PA (représentée sur la figure 1a) qui permet de transmettre la valeur de l'altitude de consigne. Dans cette configuration, en actionnant la molette 1 de sélection de l'altitude de consigne l'avion se met à monter ou à descendre.

On va maintenant passer en revue les différents tests dont peut être pourvu le système de gestion d'altitude selon l'invention de manière à garantir l'intégralité des fonctionnalités sans imposer à l'équipage l'ajout de procédures de vérification spécifiques à l'implantation de ce système de gestion.

Le système de gestion d'altitude est équipé d'un auto-test qui lorsqu'il est mauvais peut se traduire par une extinction de tous les afficheurs A1, A2, A'2 et par un allumage du voyant STBY.

De plus, dans cette situation le système de gestion d'altitude envoie vers le pilote automatique PA, vers l'autre système de gestion d'altitude des informations d'invalidité.

Il est aussi prévu un test cyclique des afficheurs A1, A2, A'2 qui lorsqu'il est mauvais peut se traduire par l'affichage pendant quelques secondes de huits puis de l'extinction des afficheurs.

Le pilote peut avoir à sa disposition des moyens pour déclencher un test du système de gestion d'altitude, des afficheurs, des voyants, de l'alarme en actionnant un bouton poussoir 2 situé sur la molette 1 dans l'exemple décrit. Une invalidité se traduit par les états décrits précédemment. Le test des voyants et afficheurs s'effectue par contrôle du courant qui les commande.

La fiabilité du système de gestion d'altitude est dépendante de la fiabilité des capteurs d'altitude. Dans le cas où le système de gestion d'altitude est relié à deux capteurs d'altitude ADC1, ADC2 il est prévu de tester la validité des deux capteurs.

Si les deux capteurs d'altitude sont invalides, les afficheurs A1, A2, A'2 peuvent l'indiquer en affichant des tirets par exemple. Dans cette situation le voyant STBY peut s'allumer. Les bits de validité reçus par le système de gestion d'altitude en provenance des capteurs mentionnent ce défaut.

Lorsque le pilote automatique PA fonctionne, il utilise les informations d'altitude pression, vitesse de l'un des capteurs d'altitude qu'il a sélectionné. Si ce capteur est invalide, le système de gestion d'altitude peut l'indiquer en affichant, par exemple sur le digit central de l'afficheur A1 de l'altitude de consigne, le numéro du capteur d'altitude valide. La figure 4 montre que c'est le capteur numéro 2 que doit sélectionner le pilote automatique PA. On voit aussi sur cette figure que l'afficheur d'altitude correcte A2 et l'afficheur de tendance A'2 sont réalisé par trois voyants les uns au dessus des autres, deux extrêmes sont utilisés pour la tendance et un central pour l'altitude correcte. L'afficheur de l'altitude de consigne A1 comporte dans ce cas cinq digits dont les deux pour les dizaines et unités sont fixes, à zéro et non commandables.

Il est également prévu d'avertir l'équipage si les deux capteurs d'altitude fournissent des altitudes dont l'écart est supérieur à un troisième seuil S3.

L'afficheur A'2 de tendance peut alors indiquer la position de l'avion par rapport à l'altitude moyenne donnée par les capteurs d'altitude.

Sur les figures 5a, 5b on suppose que l'afficheur de l'altitude correcte A2 et que l'afficheur de tendance A'2 sont confondus. Le digit de gauche indique que l'altitude d'évolution donnée par le capteur utilisé par le pilote automatique est correcte, c'est-à-dire que la différence entre l'altitude d'évolution et l'altitude de consigne est inférieure ou égale, en valeur absolue, au premier seuil S1.

Un "0" de même taille que celle des caractères de l'afficheur A1 apparaît sur le digit de gauche de l'afficheur A2.

Le digit de droite va renseigner le pilote sur la position de l'avion donnée par le capteur d'altitude utilisé par le pilote automatique PA par rapport à la moyenne des altitudes fournies par les deux capteurs d'altitude.

Sur la figure 5a, le digit de droite de l'afficheur A2 comporte un caractère de taille réduite de moitié, dans sa partie haute. Il s'agit d'un "o" dans l'exemple. Cela signifie que l'altitude d'évolution mesurée par le capteur d'altitude utilisé par le pilote automatique est plus basse que la moyenne des altitudes fournies par les deux capteurs d'altitude.

De la même manière, la figure 5b montre que le dernier digit affiche un caractère de taille réduite de moitié dans sa partie basse. L'altitude d'évolution mesurée par le capteur d'altitude utilisé par le pilote automatique est plus haute que la moyenne des altitudes fournies par les deux capteurs d'altitude.

La description qui vient d'être faite concernait un système de gestion d'altitude destiné à être monté sur un avion devant être mis en conformité avec la nouvelle réglementation.

Dans le cas d'un avion équipé d'un système FMS, on retrouverait les mêmes fonctions mais les voyants, boutons, afficheurs ne seraient pas forcément configurés de le même manière, par exemple, l'altitude de consigne pourrait apparaître sur l'écran primaire de pilotage ("Primary Flight Display") qui affiche un horizon artificiel et des indications sur la position de l'avion dans un plan horizontal et un plan vertical.

## Revendications

1. Procédé de gestion d'altitude d'un aérodyne consistant:

   - à sélectionner et à afficher une altitude de consigne,
   - à acquérir l'altitude d'évolution de l'aérodyne à partir d'un ou plusieurs capteurs d'altitude,
   - à comparer l'altitude d'évolution et l'altitude de consigne,

   caractérisé en ce qu'il consiste :

   - à armer un détecteur d'alerte altitude pourvu de moyens pour afficher son état, lorsque la différence entre l'altitude d'évolution et l'altitude de consigne est inférieure ou égale, en valeur absolue, à un premier seuil,
   - à indiquer que l'altitude d'évolution est correcte lorsque la différence entre l'altitude d'évolution et l'altitude de consigne est inférieure ou égale, en valeur absolue, au premier seuil,
   - et pendant que le détecteur d'alerte est armé à produire une alarme si la différence entre l'altitude d'évolution et l'altitude de consigne est supérieure ou égale, en valeur absolue, à un second seuil, le second seuil étant plus grand que le premier.

2. Procédé de gestion d'altitude selon la revendication 1, caractérisé en ce qu'il consiste, lorsque l'altitude d'évolution est incorrecte à indiquer si l'altitude d'évolution est plus haute ou plus basse que l'altitude de consigne.

3. Procédé de gestion d'altitude selon la revendication 2, caractérisé en ce que les moyens indiquant que l'altitude d'évolution est correcte et ceux indiquant que l'altitude d'évolution est supérieure ou inférieure à l'altitude de consigne sont confondus.

4. Procédé de gestion d'altitude selon l'un des revendications 1 à 3, caractérisé en ce qu'il consiste, après annulation de l'alarme, à désarmer le détecteur d'alerte altitude et à afficher son état.

5. Procédé de gestion d'altitude selon l'une des revendications 1 à 3, caractérisé en ce qu'il consiste à produire une alarme brève lorsque l'altitude de consigne est modifiée pendant que le détecteur d'alerte altitude est armé, la différence entre la nouvelle altitude de consigne et l'ancienne étant, en valeur absolue, supérieure ou égale au second seuil, et à désarmer le détecteur d'alerte altitude.

6. Procédé de gestion d'altitude selon l'une des revendications 1 à 3, caractérisé en ce qu'il consiste, lors d'un changement d'altitude pendant que le détecteur d'alerte est armé, si la différence entre la nouvelle altitude de consigne et l'ancienne est inférieure, en valeur absolue, au second seuil, à conserver l'ancienne valeur de l'altitude de consigne pour le déclenchement de l'alarme tant que la différence entre l'altitude d'évolution et la nouvelle altitude de consigne n'est pas inférieure ou égale, en valeur absolue, au premier seuil.

7. Procédé de gestion d'altitude selon l'une des revendications 5 ou 6, caractérisé en ce qu'il consiste à produire l'alarme brève lorsque la différence entre la nouvelle altitude de consigne et l'ancienne est, en valeur absolue, supérieure au second seuil, et à conserver l'ancienne valeur de l'altitude de consigne lorsque la différence est, en valeur absolue, inférieure ou égale au second seuil.

8. Procédé de gestion d'altitude d'un aérodyne équipé d'un pilote automatique selon l'une des revendications 1 à 7, caractérisé en ce qu'il consiste, pendant une phase de capture automatique d'altitude pendant laquelle la trajectoire de l'avion passe par une altitude extrême avant de converger vers l'altitude de consigne, à inhiber pendant certaines périodes après l'armement du détecteur d'alerte altitude le premier seuil et à le remplacer par au moins un seuil intermédiaire, plus grand que le premier seuil, calculé fonction de l'aérodyne et de sa vitesse verticale.

9. Procédé de gestion d'altitude selon la revendication 8, caractérisé en ce que le seuil intermédiaire calculé prend une première valeur entre l'instant (to) où le détecteur d'alerte altitude s'arme et l'instant (t1) où l'altitude d'évolution prend la valeur extrême.

10. Procédé de gestion d'altitude selon l'une des revendications 8 ou 9, caractérisé en ce que le seuil intermédiaire calculé prend une seconde valeur entre l'instant (t1) où la trajectoire de l'aérodyne passe par l'altitude extrême et l'instant (t2) où elle termine sa convergence.

11. Procédé de gestion d'altitude selon l'une des revendications 8 à 10, caractérisé en ce que la première valeur du seuil intermédiaire vaut :
    S1 + n1 Vz où S1 est la valeur du premier seuil, n1 est un coefficient propre à l'aérodyne et fonction notamment de son type, de sa configuration et de son équipement en début de capture automatique et Vz la vitesse verticale instantanée de l'aérodyne en début de capture automatique, vitesse issue du capteur d'altitude utilisé par le pilote automatique.

12. Procédé de gestion d'altitude selon l'une des revendications 8 à 11, caractérisé en ce que la seconde valeur du seuil intermédiaire vaut :
    S1 + n2 Vz où S1 est la valeur du premier seuil, n2 est un coefficient propre à l'aérodyne et fonction notamment de sont type, de sa configuration et de son équipement en fin de capture automatique et Vz la vitesse verticale instantanée de l'aérodyne en fin de capture automatique, vitesse issue du capteur d'altitude utilisé par le pilote automatique.

13. Procédé de gestion d'altitude selon l'une des revendications 1 à 12, caractérisé en ce qu'il consiste à effectuer des auto tests de validité.

14. Procédé de gestion d'altitude selon l'une des revendications 1 à 13, caractérisé en ce qu'il consiste à prévoir des tests permanents des indicateurs et moyens d'affichage par contrôle de courant.

15. Procédé de gestion d'altitude d'un aérodyne selon l'une des revendications 1 à 14, caractérisé en ce qu'il consiste à tester la validité des capteurs d'altitude et à fournir une indication sur leur validité.

16. Procédé de gestion d'altitude d'un aérodyne équipé d'au moins deux capteurs d'altitude, selon l'une des revendications 1 à 15, caractérisé en ce qu'il consiste à comparer les altitudes données par deux capteurs d'altitude et si l'écart est supérieur à un troisième seuil, à indiquer si l'altitude utilisée par le pilote automatique (PA) est plus haute ou plus basse que la moyenne des altitudes données par les deux capteurs.

17. Système de gestion d'altitude d'un aérodyne recevant une altitude d'évolution à partir d'un ou plusieurs capteurs d'altitude (ADC1, ADC2), comportant des moyens pour sélectionner une altitude de consigne (1), des moyens pour l'afficher (A1), des moyens pour comparer les deux altitudes, caractérisé en ce qu'il comporte :

    - un détecteur d'alerte altitude qui s'arme lorsque la différence entre l'altitude d'évolution et l'altitude de consigne est, en valeur absolue, inférieure ou égale à un premier seuil (S1),
    - des moyens (STBY) pour indiquer l'état du détecteur d'alerte altitude,
    - des moyens (A2) pour indiquer que l'altitude d'évolution est correcte lorsque la différence entre l'altitude d'évolution et l'altitude de consigne est, en valeur absolue, inférieure ou égale au premier seuil,
    - une alarme sonore et/ou visuelle (ALERT) qui est produite lorsque le détecteur d'alerte est armé, si la différence entre l'altitude d'évolution et l'altitude de consigne est, en valeur absolue, supérieure ou égale à un second seuil (S2), le second seuil étant plus grand que le premier seuil.

18. Système selon la revendication 17, caractérisé en ce que les moyens pour afficher que l'altitude d'évolution est correcte sont réalisés par un afficheur (A2) à deux digits et les moyens pour afficher (A1) l'altitude de consigne, par un afficheur à trois digits symbolisant le niveau de vol de consigne, situé à la gauche de l'afficheur à deux digits, les deux afficheurs contribuant à donner l'altitude de consigne.

19. Système selon l'une des revendications 17 ou 18, caractérisé en ce qu'il comporte des moyens pour afficher la tendance (A'2) c'est-à-dire si l'altitude d'évolution est plus haute ou plus basse que l'altitude de consigne, lorsque l'altitude d'évolution est incorrecte.

20. Système selon la revendication 19, caractérisé en ce que les moyens pour afficher la tendance sont confondus avec les moyens pour afficher que l'altitude d'évolution est correcte.

21. Système selon l'une des revendications 19 ou 20, caractérisé en ce que les moyens pour afficher la tendance (A'2) affichent au moins un caractère dans leur partie haute lorsque l'altitude d'évolution est inférieure à l'altitude de consigne, et au moins un caractère dans leur partie basse lorsque l'altitude d'évolution est supérieure à l'altitude de consigne.

22. Système selon l'une des revendications 17 à 21, caractérisé en ce qu'il comporte des moyens (3) pour annuler l'alarme, tels qu'un bouton poussoir, l'annulation de l'alarme désarmant le détecteur d'alerte altitude.

23. Système selon l'une des revendications 17 à 22, caractérisé en ce qu'il comporte des moyens pour inhiber le premier seuil, pendant certaines périodes d'une phase de capture d'altitude automatique, après l'armement du détecteur d'alerte altitude, et à le remplacer par au moins un seuil intermédiaire calculé, fonction de la vitesse verticale de l'aérodyne et d'un coefficient de performance propre à l'aérodyne fonction notamment de son type, de sa configuration, de son équipement, le seuil intermédiaire calculé étant plus grand que le premier seuil.

24. Système selon l'une des revendications 17 à 23, caractérisé en ce qu'il comporte lorsque le détecteur d'alerte altitude est armé après un changement d'altitude de consigne, lorsque la différence entre la nouvelle altitude de consigne et l'ancienne est, en valeur absolue, inférieure ou égale au second seuil, des moyens pour conserver l'ancienne altitude de consigne pour le déclenchement de l'alarme tant que la différence entre l'altitude d'évolution et la nouvelle altitude de consigne n'est pas inférieure ou égale, en valeur absolue, au premier seuil.

25. Système selon l'une des revendications 17 à 24, caractérisé en ce qu'il comporte des moyens pour déclencher l'alarme de manière brève et pour désarmer le détecteur d'alerte altitude lors d'un changement d'altitude de consigne, si la différence entre la nouvelle altitude de consigne et l'ancienne est supérieure, en valeur absolue, au second seuil.

26. Système selon l'une des revendications 24 ou 25, caractérisé en ce que l'alarme brève est produite lorsque la différence entre la nouvelle altitude et l'ancienne est, en valeur absolue, supérieure ou égale au second seuil et en ce que l'ancienne valeur de l'altitude de consigne est conservée, lorsque ladite différence est, en valeur absolue, inférieure au second seuil.

27. Système selon l'une des revendications 17 à 26 dans lequel les moyens d'affichage sont des afficheurs à consommation de courant, l'alarme est matérialisée par un premier voyant (ALERT), le détecteur d'alerte altitude par un second voyant (STBY), caractérisé en ce qu'il comporte des moyens (MC) pour mesurer le courant dans les afficheurs, les voyants pour connaître leur validité.

28. Système selon l'une des revendications 17 à 27, caractérisé en ce qu'il comporte des moyens pour s'auto-tester.

29. Système selon l'une des revendications 17 à 28, caractérisé en ce qu'il comporte des moyens (2) pour déclencher à la demande un test de validité du système.

30. Système selon l'une des revendications 17 à 29, caractérisé en ce qu'il comporte des moyens pour estimer la validité des capteurs d'altitude et pour fournir une indication sur leur validité.

31. Système de gestion d'altitude d'un aérodyne équipé d'au moins deux capteurs d'altitude selon l'une des revendications 17 à 30, caractérisé en ce qu'il comporte des moyens pour comparer les altitudes données par les deux capteurs d'altitude et si l'écart est supérieur à un troisième seuil, des moyens pour indiquer si l'altitude utilisée par le pilote automatique (PA) est plus haute ou plus basse que la moyenne des altitudes données par les deux capteurs.

**Patentansprüche**

1. Verfahren zum Steuern der Höhe eines Luftfahrzeugs, das darin besteht:

   - eine Sollhöhe zu wählen und anzuzeigen,
   - die Bewegungshöhe des Luftfahrzeugs anhand eines oder mehrerer Höhensensoren zu erfassen,
   - die Bewegungshöhe mit der Sollhöhe zu vergleichen,

   dadurch gekennzeichnet, daß es darin besteht:

   - einen Höhenwarndetektor, der mit Mitteln zum Anzeigen seines Zustandes versehen ist, in Bereitschaft zu versetzen, wenn die Differenz zwischen der Bewegungshöhe und der Sollhöhe dem Absolutwert nach kleiner oder gleich einem ersten Schwellenwert ist,

- anzugeben, daß die Bewegungshöhe korrekt ist, wenn die Differenz zwischen der Bewegungshöhe und der Sollhöhe dem Absolutwert nach kleiner oder gleich dem ersten Schwellenwert ist,

- und dann, wenn der Warndetektor im Bereitschaftszustand ist, einen Alarm zu erzeugen, wenn die Differenz zwischen der Bewegungshöhe und der Sollhöhe dem Absolutwert nach größer oder gleich einem zweiten Schwellenwert ist, wobei der zweite Schwellenwert größer als der erste Schwellenwert ist.

2. Höhensteuerverfahren nach Anspruch 1, dadurch gekennzeichnet, daß es dann, wenn die Bewegungshöhe nicht korrekt ist, darin besteht, anzugeben, ob die Bewegungshöhe höher oder niedriger als die Sollhöhe ist.

3. Höhensteuerverfahren nach Anspruch 2, dadurch gekennzeichnet, daß die Mittel, die angeben, daß die Bewegungshöhe korrekt ist, und jene, die angeben, daß die Bewegungshöhe größer oder kleiner als die Sollhöhe ist, identisch sind.

4. Höhensteuerverfahren nach einem der Ansprüche 1 bis 3, dadurch gekennzeichnet, daß es nach der Beseitigung des Alarms darin besteht, den Bereitschaftszustand des Höhenwarndetektors zu beenden und seinen Zustand anzuzeigen.

5. Höhensteuerverfahren nach einem der Ansprüche 1 bis 3, dadurch gekennzeichnet, daß es darin besteht, einen kurzen Alarm zu erzeugen, wenn die Sollhöhe modifiziert wird, während der Höhenwarndetektor im Bereitschaftszustand ist, wenn die Differenz zwischen der neuen Sollhöhe und der alten dem Absolutwert nach größer oder gleich dem zweiten Schwellenwert ist, und den Bereitschaftszustand des Höhenwarndetektors zu beenden.

6. Höhensteuerverfahren nach einem der Ansprüche 1 bis 3, dadurch gekennzeichnet, daß es bei einer Höhenänderung während des Bereitschaftszustandes des Warndetektors dann, wenn die Differenz zwischen der neuen Sollhöhe und der alten dem Absolutwert nach kleiner als der zweite Schwellenwert ist, darin besteht, den alten Höhensollwert für die Auslösung des Alarms beizubehalten, solange die Differenz zwischen der Bewegungshöhe und der neuen Sollhöhe dem Absolutwert nach nicht kleiner oder gleich dem ersten Schwellenwert ist.

7. Höhensteuerverfahren nach einem der Ansprüche 5 oder 6, dadurch gekennzeichnet, daß es darin besteht, einen kurzen Alarm zu erzeugen, wenn die Differenz zwischen der neuen Sollhöhe und der alten dem Absolutwert nach größer als der zweite Schwellenwert ist, und den alten Höhensollwert beizubehalten, wenn die Differenz dem Absolutwert nach kleiner oder gleich dem zweiten Schwellenwert ist.

8. Höhensteuerverfahren für ein mit einem Autopiloten ausgerüstetes Luftfahrzeug nach einem der Ansprüche 1 bis 7, dadurch gekennzeichnet, daß es während einer automatischen Höhenerfassungsphase, während der die Bahn des Flugzeugs durch eine extreme Höhe verläuft, bevor sie gegen die Sollhöhe konvergiert, darin besteht, während bestimmter Perioden nach dem Versetzen des Höhenwarndetektors in den Bereitschaftszustand den ersten Schwellenwert zu sperren und ihn durch wenigstens einen Zwischenschwellenwert zu ersetzen, der größer als der erste Schwellenwert ist und in Abhängigkeit vom Luftfahrzeug und seiner Vertikalgeschwindigkeit berechnet wird.

9. Höhensteuerverfahren nach Anspruch 8, dadurch gekennzeichnet, daß der berechnete Zwischenschwellenwert zwischen dem Zeitpunkt (to), zu dem der Höhenwarndetektor in den Bereitschaftszustand versetzt wird, und dem Zeitpunkt (tl), zu dem die Bewegungshöhe den Extremwert annimmt, einen ersten Wert annimmt.

10. Höhensteuerverfahren nach einem der Ansprüche 8 oder 9, dadurch gekennzeichnet, daß der berechnete Zwischenwert zwischen dem Zeitpunkt (tl), zu dem die Bahn des Luftfahrzeugs durch die extreme Höhe verläuft, und dem Zeitpunkt (t2), zu dem ihre Konvergenz endet, einen zweiten Wert annimmt.

11. Höhensteuerverfahren nach einem der Ansprüche 8 bis 10, dadurch gekennzeichnet, daß der erste Zwischenschwellenwert beträgt:

S1 + n1 Vz, wobei S1 der erste Schwellenwert ist, n1 ein dem Luftfahrzeug eigentümlicher Koeffizient ist, der insbesondere von dessen Typ, dessen Konfiguration und dessen Ausrüstung am Beginn der automatischen Erfassung abhängt, und Vz die momentane Vertikalgeschwindigkeit des Luftfahrzeugs am Beginn der automatischen Erfassung ist, wobei die Geschwindigkeit von dem vom Autopiloten verwendeten Höhensensor ausgegeben wird.

12. Höhensteuerverfahren nach einem der Ansprüche 8 bis 11, dadurch gekennzeichnet, daß der zweite Zwischenschwellenwert beträgt:

S1 + n2 Vz, wobei S1 der erste Schwellenwert ist, n2 ein dem Luftfahrzeug eigentümlicher Koeffizient ist, der insbesondere von dessen Typ, dessen Konfiguration und dessen Ausrüstung am Ende der automatischen Erfassung abhängt, und Vz die momentane Vertikalgeschwindigkeit des Luftfahrzeugs am Ende der automatischen Erfassung ist, wobei die Geschwindigkeit von dem vom Autopiloten verwendeten Höhensensor ausgegeben wird.

13. Höhensteuerverfahren nach einem der Ansprüche 1 bis 12, dadurch gekennzeichnet, daß es darin besteht, Gültigkeits-Selbstprüfungen auszuführen.

14. Höhensteuerverfahren nach einem der Ansprüche 1 bis 13, dadurch gekennzeichnet, daß es darin besteht, ständige Prüfungen der Angabeeinrichtungen und der Anzeigemittel durch Kontrolle des Stroms vorzusehen.

15. Höhensteuerverfahren für ein Luftfahrzeug nach einem der Ansprüche 1 bis 14, dadurch gekennzeichnet, daß es darin besteht, die Gültigkeit der Höhensensoren zu prüfen und einen Hinweis ihrer Gültigkeit zu liefern.

16. Höhensteuerverfahren für ein mit wenigstens zwei Höhensensoren ausgerüstetes Luftfahrzeug nach irgendeinem der Ansprüche 1 bis 15, dadurch gekennzeichnet, daß es darin besteht, die von zwei Höhensensoren angegebenen Höhen zu vergleichen und dann, wenn der Abstand größer als ein dritter Schwellenwert ist, anzugeben, daß die vom Autopiloten (PA) verwendete Höhe höher oder niedriger als der Mittelwert der von den beiden Sensoren angegebenen Höhen ist.

17. Höhensteuerverfahren für ein Luftfahrzeug, das eine Bewegungshöhe anhand eines oder mehrerer Höhensensoren (ADC1, ADC2) empfängt, mit Mitteln (1) zum Wählen einer Sollhöhe, Mitteln (A1) zum Anzeigen der Sollhöhe und Mitteln zum Vergleichen der beiden Höhen, dadurch gekennzeichnet, daß es enthält:

- einen Höhenwarndetektor, der in Bereitschaft versetzt wird, wenn die Differenz zwischen der Bewegungshöhe und der Sollhöhe dem Absolutwert nach kleiner oder gleich einem ersten Schwellenwert (S1) ist,
- Mittel (STBY) zum Angeben des Zustandes des Höhenwarndetektors,
- Mittel (A2) zum Angeben, daß die Bewegungshöhe korrekt ist, wenn die Differenz zwischen der Bewegungshöhe und der Sollhöhe dem Absolutwert nach kleiner oder gleich dem ersten Schwellenwert ist,
- einen akustischen und/oder visuellen Alarm (ALERT), der erzeugt wird, wenn der Höhenwarndetektor im Bereitschaftszustand ist, falls die Differenz zwischen der Bewegungshöhe und der Sollhöhe dem Absolutwert nach größer oder gleich einem zweiten Schwellenwert (S2) ist, der größer als der erste Schwellenwert ist.

18. System nach Anspruch 17, dadurch gekennzeichnet, daß die Mittel zum Anzeigen, daß die Bewegungshöhe korrekt ist, durch eine Anzeigevorrichtung (A2) mit zwei Ziffern verwirklicht sind und daß die Mittel (A1) zum Anzeigen der Sollhöhe durch eine Anzeigevorrichtung mit drei die Sollflughöhe symbolisierenden Ziffern, die sich links von der Anzeigevorrichtung mit zwei Ziffern befindet, verwirklicht sind, wobei die beiden Anzeigevorrichtungen dazu beitragen, die Sollhöhe anzugeben.

19. System nach einem der Ansprüche 17 oder 18, dadurch gekennzeichnet, daß es Mittel (A'2) enthält, die die Tendenz anzeigen, d. h., ob die Bewegungshöhe höher oder niedriger als die Sollhöhe ist, wenn die Bewegungshöhe nicht korrekt ist.

20. System nach Anspruch 19, dadurch gekennzeichnet, daß die Mittel zum Anzeigen der Tendenz mit den Mitteln, die anzeigen, daß die Bewegungshöhe korrekt ist, identisch sind.

21. System nach einem der Ansprüche 19 oder 20, dadurch gekennzeichnet, daß die Mittel (A'2) zum Anzeigen der Tendenz wenigstens ein Zeichen in ihrem oberen Teil anzeigen, wenn die Bewegungshöhe niedriger als die Sollhöhe ist, und wenigstens ein Zeichen in ihrem unteren Teil anzeigen, wenn die Bewegungshöhe höher als die Sollhöhe ist.

22. System nach einem der Ansprüche 17 bis 21, dadurch gekennzeichnet, daß es Mittel (3) zum Beseitigen des Alarms wie etwa einen Druckknopf enthält, wobei die Beseitigung des Alarms den Bereitschaftszustand des Höhenwarndetektors beendet.

23. System nach einem der Ansprüche 17 bis 22, dadurch gekennzeichnet, daß es Mittel enthält zum Sperren des ersten Schwellenwertes während bestimmter Perioden einer Phase einer automatischen Höhenerfassung nach dem Versetzen des Höhenwarndetektors in den Bereitschaftszustand und zum Ersetzen des ersten Schwellenwerts durch wenigstens einen berechneten Zwischenschwellenwert, der von der Vertikalgeschwindigkeit des Luftfahrzeugs und von einem dem Luftfahrzeug eigentümlichen Betriebsverhaltenskoeffizienten abhängt, der seinerseits insbesondere von dessen Typ, dessen Konfiguration und dessen Ausrüstung abhängt, wobei der berechnete Zwischenschwellenwert größer als der erste Schwellenwert ist.

24. System nach einem der Ansprüche 17 bis 23, dadurch gekennzeichnet, daß es dann, wenn der Höhenwarndetektor nach einer Änderung der Sollhöhe in den Bereitschaftszustand versetzt wird und die Differenz zwischen der neuen Sollhöhe und der alten dem Absolutwert nach kleiner oder gleich dem zweiten Schwellenwert ist, Mittel enthält, die die alte Sollhöhe für die Auslösung des Alarms beibehalten, solange die Differenz zwischen der Bewegungshöhe und der neuen Sollhöhe dem Absolutwert nach nicht kleiner oder gleich dem ersten Schwellenwert ist.

25. System nach einem der Ansprüche 17 bis 24, dadurch gekennzeichnet, daß es Mittel enthält, die bei einer Änderung der Sollhöhe einen kurzen Alarm auslösen und den Bereitschaftszustand des Höhenwarndetektors beenden, falls die Differenz zwischen der neuen Sollhöhe und der alten dem Absolutwert nach größer als der zweite Schwellenwert ist.

26. System nach einem der Ansprüche 24 oder 25, dadurch gekennzeichnet, daß der kurze Alarm erzeugt wird, wenn die Differenz zwischen der neuen Höhe und der alten dem Absolutwert nach größer oder gleich dem zweiten Schwellenwert ist und daß der alte Höhensollwert beibehalten wird, wenn die Differenz dem Absolutwert nach kleiner als der zweite Schwellenwert ist.

27. System nach einem der Ansprüche 17 bis 26, in dem die Anzeigemittel stromverbrauchende Anzeigeeinrichtungen sind, der Alarm durch eine erste Anzeige (ALERT) verwirklicht wird und der Höhenwarndetektor durch eine zweite Anzeige (STBY) verwirklicht wird, dadurch gekennzeichnet, daß es Mittel (MC) enthält, die den Strom in den Anzeigeeinrichtungen und in den Anzeigen messen, um ihre Gültigkeit zu kennen.

28. System nach einem der Ansprüche 17 bis 27, dadurch gekennzeichnet, daß es Selbstprüfungsmittel enthält.

29. System nach einem der Ansprüche 17 bis 28, dadurch gekennzeichnet, daß es Mittel (2) zum Auslösen einer Systemgültigkeitsprüfung auf Anforderung enthält.

30. System nach einem der Ansprüche 17 bis 29, dadurch gekennzeichnet, daß es Mittel zum Schätzen der Gültigkeit von Höhensensoren und zum Liefern eines Hinweises ihrer Gültigkeit enthält.

31. Höhensteuersystem für ein mit wenigstens zwei Höhensensoren ausgerüstetes Luftfahrzeug nach einem der Ansprüche 17 bis 30, dadurch gekennzeichnet, daß es Mittel, die die von den beiden Höhensensoren angegebenen Höhen vergleichen, sowie Mittel, die dann, wenn der Abstand größer als ein dritter Schwellenwert ist, angeben, ob die vom Autopiloten (PA) verwendete Höhe höher oder niedriger als der Mittelwert der von den beiden Sensoren angegebenen Höhen ist, enthält.

## Claims

1. Method for controlling the altitude of an aerodyne, consisting in:

   - selecting and displaying a reference altitude,
   - acquiring the aerodyne's manoeuvring altitude from one or more altitude sensors,
   - comparing the manoeuvring altitude with the reference altitude,

   characterised in that it consists in:

   - arming an altitude alert detector provided with means for displaying its status, when the difference between the manoeuvring altitude and the reference altitude is less than or equal, in absolute value, to a first threshold,
   - indicating that the manoeuvring altitude is correct when the difference between the manoeuvring altitude and the reference altitude is less than or equal, in absolute value, to the first threshold,
   - and, while the alert detector is armed, producing an alarm if the difference between the manoeuvring altitude and the reference altitude is greater than or equal, in absolute value, to a second threshold, the second threshold being bigger than the first.

2. Method of altitude control according to claim 1, characterised in that it consists, when the manoeuvring altitude is incorrect, in indicating if the manoeuvring altitude is higher or lower than the reference altitude.

3. Method of altitude control according to claim 2, characterised in that the means indicating that the manoeuvring altitude is correct and those indicating that the manoeuvring altitude is higher or lower than the reference altitude are merged.

4. Method of altitude control according to one of claims 1 to 3, characterised in that it consists, after cancelling the alarm, in disarming the altitude alert detector and displaying the status thereof.

5. Method of altitude control according to one of claims 1 to 3, characterised in that it consists in producing a brief alarm when the reference altitude is modified while the altitude alert detector is armed, the difference between the new reference altitude and the old one being, in absolute value, greater than or equal to the second threshold, and in disarming the altitude alert detector.

6. Method of altitude control according to one of claims 1 to 3, characterised in that it consists, when there is a change in altitude while the alert detector is armed, if the difference between the new reference altitude and the old one is lower, in absolute value, than the second threshold, in retaining the old reference altitude value in order to activate the alarm for as long as the difference between the manoeuvring altitude and the new reference altitude is not less than or equal, in absolute value, to the first threshold.

7. Method for altitude control according to either of claims 5 and 6, characterised in that it consists in producing the brief alarm whenever the difference between the new reference altitude and the old one is higher, in absolute value, than the second threshold, and in retaining the old reference altitude value whenever the difference, in absolute value, is less than or equal to the second threshold.

8. Method for controlling the altitude of an aerodyne equipped with an automatic pilot according to one of claims 1 to 7, characterised in that it consists, during an automatic altitude capture phase during which the aircraft's trajectory passes through an extreme altitude before converging towards the reference altitude, in inhibiting the first threshold for certain periods after arming the altitude alert detector and in replacing said threshold with at least one intermediate threshold bigger than the computed first threshold which is a function of the aerodyne and its vertical speed.

9. Method for altitude control according to claim 8, characterised in that the computed intermediate threshold assumes a first value between the instant (tO) at which the altitude alert detector is armed and the instant (tl) at which the manoeuvring altitude assumes the extreme value.

10. Method for altitude control according to either of claims 8 and 9, characterised in that the computed intermediate threshold assumes a second value between the instant (tl) at which the aerodyne's trajectory passes through the extreme altitude and the instant (t2) at which it ends its convergence.

11. Method for altitude control according to one of claims 8 to 10, characterised in that the first value of the intermediate threshold is:
S1 + nl Vz where S1 is the value of the first threshold, nl is a coefficient particular to the aerodyne and notably a function of its type, configuration and equipment at the start of automatic capture, and Vz the instantaneous vertical speed of the aerodyne at the start of automatic capture, said speed being taken from the altitude sensor used by the automatic pilot.

12. Method for altitude control according to one of claims 8 to 11, characterised in that the second value of the intermediate threshold is:
S1 + n2 Vz where S1 is the value of the first threshold, n2 is a coefficient particular to the aerodyne and notably a function of its type, configuration and equipment at the end of automatic capture, and Vz the instantaneous vertical speed of the aerodyne at the end of automatic capture, said speed being taken from the altitude sensor used by the automatic pilot.

13. Method for altitude control according to one of claims 1 to 12, characterised in that it consists in carrying out validity self-tests.

14. Method for altitude control according to one of claims 1 to 13, characterised in that it consists in providing permanent tests of the indicators and display means by current control.

15. Method for controlling the altitude of an aerodyne according to one of claims 1 to 14, characterised in that it consists in testing the validity of the altitude sensors and in providing an indication as to their validity.

16. Method for controlling the altitude of an aerodyne equipped with at least two altitude sensors, according to one of claims 1 to 15, characterised in that it consists in comparing the altitudes given by two altitude sensors and if the discrepancy is greater than a third threshold, in indicating if the altitude used by the automatic pilot (AP) is higher or lower than the average of the altitudes given by the two sensors.

17. System for controlling the altitude of an aerodyne receiving a manoeuvring altitude from one or more altitude sensors (ADC1, ADC2), having means for selecting a reference altitude (1), display means (A1), and means for comparing the two altitudes, characterised by comprising:

- an altitude alert detector which is armed whenever the difference between the manoeuvring altitude and the reference altitude is, in absolute value, less than or equal to a first threshold (S1),
- means (STBY) for indicating the status of the altitude alert detector,
- means (A2) for indicating that the manoeuvring altitude is correct whenever the difference between the manoeuvring altitude and the reference altitude is, in absolute value, less than or equal to the first threshold,

- an audio and/or visual alarm (ALERT) which is produced whenever the alert detector is armed, if the difference between the manoeuvring altitude and the reference altitude is, in absolute value, greater than or equal to a second threshold (S2), the second threshold being bigger than the first threshold.

18. System according to claim 17, characterised in that the means for displaying that the manoeuvring altitude is correct are realised by a double-digit display (A2), and the means (A1) for displaying the reference altitude by a three-digit display symbolising the reference flight level, situated to the left of the double-digit display, the two displays helping to provide the reference altitude.

19. System according to either of claims 17 and 18, characterised in that it includes means for displaying the trend (A'2), i.e. if the manoeuvring altitude is higher or lower than the reference altitude, whenever the manoeuvring altitude is incorrect.

20. System according to claim 19, characterised in that the means for displaying the trend are merged with the means for displaying that the manoeuvring altitude is correct.

21. System according to either of claims 19 and 20, characterised in that the means for displaying the trend (A'2) display at least one character in their upper part whenever the manoeuvring altitude is lower than the reference altitude, and at least one character in their lower part whenever the manoeuvring altitude is higher than the reference altitude.

22. System according to one of claims 17 to 21, characterised in that it includes means (3) for cancelling the alarm, such as a push button, and the cancellation of the alarm disarms the altitude alert detector.

23. System according to one of claims 17 to 22, characterised in that it includes means for inhibiting the first threshold, during certain periods of an automatic altitude capture phase, after arming the altitude alert detector, and in replacing it with at least one computed intermediate threshold, a function of the vertical speed of the aerodyne and of a performance coefficient particular to the aerodyne and notably a function of its type, configuration and equipment, the computed intermediate threshold being bigger than the first threshold.

24. System according to one of claims 17 to 23, characterised in that, when the altitude alert detector is armed after a reference altitude change, whenever the difference between the new reference altitude and the old one is, in absolute value, less than or equal to the second threshold, said system includes means for retaining the old reference altitude in order to activate the alarm for as long as the difference between the manoeuvring altitude and the new reference altitude is not less than or equal, in absolute value, to the first threshold.

25. System according to one of claims 17 to 24, characterised in that it includes means for activating the alarm briefly and for disarming the altitude alert detector whenever the reference altitude changes, if the difference between the new reference altitude and the old one is greater, in absolute value, than the second threshold.

26. System according to either of claims 24 and 25, characterised in that the brief alarm is produced whenever the difference between the new altitude and the old one is, in absolute value, greater than or equal to the second threshold and in that the old reference altitude value is retained whenever said difference is, in absolute value, less than the second threshold.

27. System according to one of claims 17 to 26 in which the display means are current consumption displays, the alarm is manifested by a first indicator lamp (ALERT), and the altitude alert detector by a second indicator lamp (STBY), characterised in that it includes means (MC) for measuring the current in the displays and the indicator lamps in order to discover the validity thereof.

28. System according to one of claims 17 to 27, characterised in that it includes self-test means.

29. System according to one of claims 17 to 28, characterised in that it includes means (2) for activating a system validity test on demand.

30. System according to one of claims 17 to 29, characterised in that it includes means for assessing the validity of the altitude sensors and for providing an indication as to the validity thereof.

31. System for controlling the altitude of an aerodyne equipped with at least two altitude sensors according to claims 17 to 30, characterised in that it includes means for comparing the altitudes given by the two altitude sensors and if the discrepancy is greater than a third threshold, means for indicating if the altitude used by the automatic pilot (AP) is higher or lower than the average of the altitudes given by the two sensors.

FIG.1a

FIG.1b

FIG.1c

17

FIG.2

FIG.3

FIG.4

FIG.5a

FIG.5b